# EUROPÄISCHE PATENTANMELDUNG

(11) **EP 1 643 614 A2**
(43) Veröffentlichungstag der Anmeldung: **05.04.2006**
(21) Anmeldenummer: 05020061.7
(22) Anmeldetag: 15.09.2005
(51) Int. Cl.: H02K 1/14

(54) **Stator einer elektrischen Maschine**

(30) Priorität: 02.10.2004 DE 102004048105
(71) Anmelder: Bosch Rexroth AG, 70184 Stuttgart (DE)
(72) Erfinder: Groening, Ingolf, 97816 Lohr am Main (DE); Kunkel, Helmut, 97859 Wiesthal (DE)

(57) **Zusammenfassung**

Stator 1 eines Elektromotors mit vieleckiger Umrandung 8 der bezüglich seiner Geometrie optimiert ist, wobei die Nuten 13 so angeordnet sind, dass der Wandungsabstand 4, h1 maximal wird oder der Aussparungsabstand 5, h2 maximal wird oder der Wandungsabstand 4, h1 und der Aussparungsabstand 5, h2 gleich groß ist.

## Beschreibung

Die Erfindung befasst sich mit dem Stator einer elektrischen Maschine und dessen Herstellung gemäß den Oberbegriffen der unabhängigen Ansprüche.

Es sind zahlreiche Statorquerschnitte für elektrische Maschinen aus dem Stand der Technik bekannt. Das Dokument JP 9121519 A zeigt beispielsweise einen Statorquerschnitt, welcher alle Merkmale des Oberbegriffes der Erfindung erfüllt. Dieses Dokument stellt den nächstliegenden Stand der Technik dar. Ziel der hier gezeigten Ausführungsform ist es, durch eine geschickt gewählte Geometrie die Herstellungskosten zu senken und eine optimale Materialausbeute-zu gewährleisten.

Die vorliegende Erfindung soll einen bezüglich seiner Geometrie soweit optimierten Stator für eine elektrische Maschine der Eingangs genannten Art liefern, bei der eine bestmögliche Ausnutzung des Bauraumes bei verbesserter Volumenkraftdichte gewährleistet ist. Weiter soll ein Verfahren zur Umsetzung eines geeigneten Herstellungsprozesses angegeben werden.

Die Aufgabe löst die Erfindung gemäß dem Kennzeichen der unabhängigen Ansprüche dadurch, dass der Wandungsabstand maximal wird oder der Aussparungsabstand maximal wird oder der Wandungsabstand und der Aussparungsabstand gleich groß sind. Die Abstände können mittels Drehung um einen Drehwinkel α des Statorgrundrisses realisiert werden.

Sofern die Querschnitte der Aussparungen vernachlässigbar klein sind, genügt es den Wandungsabstand alleine zu maximieren und den Aussparungsabstand zu vernachlässigen. Dies ist immer dann automatisch der Fall, wenn der Aussparungsabstand größer dem Wandungsabstand ist und bleibt. Ein solches Fallbeispiel zeigt die nachfolgende Tabelle:

| **Alpha** | **Wandungsabstand** | **Gewählte Konfiguration** |
|---|---|---|
| 5° | 16 | |
| 10° | 18 | |
| **15°** | **20** | **X** |
| 20° | 16 | |

Das Kreuz kennzeichnet die gewählte Konfiguration. Bei einem Wandungsabstand von 20 (Maximalwert in der Tabelle) ergibt sich eine erforderliche geometrischen Drehung von α = 15°.

Fällt der Aussparungsabstand dagegen kleiner als der Wandungsabstand aus ― evtl. weil es sich diesmal um einen nicht vernachlässigbaren Aussparungsquerschnitt handelt - so maximiert man nur den Aussparungsabstand.

Es ist bei den zuvor erwähnten Optimierungen allerdings immer darauf zu achten, dass der jeweils andere, gerade nicht betrachtete Abstand nicht kleiner als der zu optimierende Abstand wird. Er sollte allenfalls identisch oder größer ausfallen. Im Falle der Optimierung des Wandungsabstandes gilt somit, dass der Aussparungsabstand größer oder allenfalls im wesentlichen gleich dem Wandungsabstand und im Falle der Optimierung des Aussparungsabstandes dass der Wandungsabstand größer oder allenfalls im wesentlichen gleich dem Aussparungsabstand bleiben muss.

In dem Falle, dass ein viereckiger Statorgrundriß mit vier runden Aussparungen konfiguriert ist (z.B. in jeder Ecke jeweils eine kleine Bohrung), ergibt sich der ideale Zustand, wenn-der Wandungsabstand im wesentlichen gleich dem Aussparungsabstand gewählt wird. Siehe auch nachfolgende Tabelle.

| **Alpha** | **Wandungsabstand** | **Aussparungsabstand** | **Gewählte Konfiguration** |
|---|---|---|---|
| 0° | 15 | 9 | |
| 3° | 14 | 10 | |
| **7,5°** | **12** | **12** | **X** |
| 12° | 10 | 14 | |
| 15° | 9 | 15 | |

Das Kreuz kennzeichnet die gewählte Konfiguration. Der ideale Drehwinkel α = 7,5° ergibt sich bei Wandungsabstand = Aussparungsabstand = 12.

Der Wandungsabstand wird unter anderem auch von der Form der Nut beeinflusst. Bei einer U-förmigen Nut beispielsweise wäre der Wandungsabstand von dem Punkt des Nutbodens zu messen, welcher den kleinsten Abstand zur Statorumrandung hat. Während die Nuten zur Aufnahme von Kupferwicklungen gedacht sind, sind die Aussparungen zur Befestigung der Lagerschilder am Stator gedacht. Die Nutquerschnitte und die Aussparungsquerschnitte können theoretisch jede beliebige Form annehmen.

Der Vorteil der Erfindung ist, dass aufgrund der gewählten Abstände gewährleistet wird, dass die für den Betrieb der Maschine erforderliche Mindeststatorwandstärke nicht unterschritten wird. Auch beim Design der Nut- und Aussparungsquerschnitte zur Erzielung der für die zu realisierende Bauform optimalen Geometrie und zur Erzielung einer möglichst hohen Volumenkraftdichte dienen die Abstände als Richtwerte. Im Wesentlichen geht es bei der Erfindung um die Optimierung des magnetischen Kreises. Je geringer die Abstände gewählt sind, desto größer ist die Sättigung an den durch die Abstände verursachten Engstellen im Statorblock und desto größer der magnetische Widerstand an diesen Engpässen. Je geringer aber der magnetische Widerstand ist, desto höher wird die Leistungsdichte im magnetischen Kreis. Auch ein mechanischer Bruch entlang der Nuten kann bei Berücksichtigung zulässiger Abstandswerte vermieden werden.

Jede Nut ist beidseitig von Zähnen begrenzt, welche Wicklungen tragen können. Bei den Wicklungen kann es sich um konzentrierte oder verteilte Wicklungen handeln. Es sind Ausführungen denkbar, bei denen jeder Zahn eine Wicklung trägt oder sich bewickelte Zähne (Pole) mit unbewickelten Zähnen (Polen) abwechseln.

Vorteilhafterweise geht man bei der Ermittlung der Aussparungsabstände bzw. der Wandungsabstände wie folgt vor: Für praktisch jede fiktive Drehstellung der Rotoraussparung inklusive der an der Rotoraussparung angeordneten Nuten relativ zur Querschnittsmittelachse des Stators werden die Abstände ermittelt, so dass für jede Drehstellung ein Drehwinkel und ein zugehöriges Abstandswertepaar (siehe Tabellen oben) ermittelt werden kann: Aus den so gewonnenen und einem Drehwinkel zugeordneten Wertepaaren, welche jeweils nur die Minimalabstände für Wandabstand bzw. Aussparungsabstand repräsentieren, werden die im wesentlichen maximalen Werte ausgewählt bzw. wird der im wesentliche maximale Wert ausgewählt oder abhängig vom Statorgrundriß der im wesentliche gleiche Wert für beide Abstände.

Bei dieser Methode kann theoretisch eine Vielzahl von Abständen erfasst werden und je nach Statorgeometrie weisen die Wandungsabstands- bzw. Aussparungsabstandswerte für jede Nut aufgrund von Symmetrien identische oder unterschiedliche Werte auf. Bei der Betrachtung der Wertepaare sind jedoch nur die Minimalabstände zu berücksichtigen, da für alle anderen Wertepaare die geforderten Abstände automatisch dann erfüllt sind, wenn die betrachteten Minimalabstände ihr Maximum aufweisen, denn sie liegen per Definition über diesen Werten. Auf diese Art und Weise sind die Abstände einfach mittels geeigneter rechnergestützter Methoden bestimmbar.

Besonders vorteilhaft wird für diejenige Drehstellung ein Drehwinkel α definiert, bei dem der praktisch größte Abstandswert aus den ermittelten Minimalabständen vorliegt oder eine der anderen zuvor erwähnten Bedingungen erfüllt ist. Zur Realisierung des Stators muss dann lediglich ein Winkel anstelle einer Vielzahl von Abständen kontrolliert bzw. verwendet werden. Praktisch bedeutet hier, dass sich die Genauigkeit der Abstandswerte in der Größenordnung der Fertigungstoleranzen bewegen müssen und eine Berechnung mit höherer Auflösung nicht zwingend erforderlich ist. Auch die Winkelwerte müssen keine höhere Genauigkeit aufweisen, als dies bei der praktischen Verwendung erforderlich ist. Der Drehwinkel liegt in einem Bereich zwischen 0° und 360°, abhängig von der Statorgeometrie und von vorhandenen Symmetrien genügen ggf. jedoch schon Drehungen innerhalb reduzierter Bereiche, wie zum Beispiel zwischen 0° und X °, wobei der Wert X theoretisch beliebige positiven Zahlen umfassen kann, beispielsweise 15°, 30°, 60° oder 90°.

Der bevorzugte Nutquerschnitt ist polygonförmig, wobei der Nutboden V-förmig und gleichschenklig ausgebildet ist. Hier ergibt sich eine hohe Volumenkraftdichte.

Bevorzugt besteht der Stator aus gestanzten und laminierten Einzelblechen welche zu einem Blechpaket mittels Verpressen, Verbacken, Laserschweißen oder Schweißen mit Flamme zusammengefügt bzw. packetiert sind. Damit können Verluste durch Wirbelströme reduziert werden. Selbstverständlich sind alle weiteren aus dem Stand der Technik bekannten, jedoch hier nicht genannten, Packetierungsverfahren auch anwendbar.

Besonders bevorzugt hat der Statorquerschnitt die Form eines Vieleckes, insbesondere eines Quadrates, und die Aussparungen innerhalb der Ecken sind als Ausnehmungen bzw. Ausstanzungen, insbesondere Bohrungen, ausgebildet. Damit erreicht man eine gleichmäßige Beabstandung vom Statorumfang bei symmetrischer Feldverteilung und geringstem Materialverbrauch.

Ganz besonders bevorzugt wird der Stator einteilig ausgebildet, um die Anzahl der Herstellungsschritte auf das unbedingt Notwendige zu reduzieren.

Alternativ kann der Stator mehrteilig ausgebildet sein, indem zum Beispiel die Zähne zur Aufnahme von Wicklungen mittels formschlüssiger Verbindungen am Statormantel angebracht sind. Hierdurch könnte eine Bewicklung der Zähne außerhalb des Stators erfolgen, was wesentlich schneller und einfacher zu realisieren ist.

Vorteilhaft ist die Verwendung eines erfindungsgeinäßen Stators bei einem Servomotor, vorzugsweise einem Servomotor für Roboteranwendungen, da es sich hier um ein Massengeschäft mit hohen Stückzahlen handelt und oftmals eine hohe Kraftdichte gefordert ist.

Generell wird die Erfindung für alle Statoren empfolen, unabhängig davon welche Nutanzahl vorhanden ist.

Ein geeignetes Herstellungsverfahren liefert die Erfindung, indem das Standardverfahren zur Herstellung des Stators folgende zusätzliche Schritte umfasst:
a) drehen des Stators um einen Winkel α relativ zu einer seiner Symmetrieachsen;
b) anschließender Materialabtrag.
Bei der Positionierung des Stators anstelle der Werkzeuge zur Herstellung der Ausnehmungen bzw. Nuten lässt sich dieser Herstellungsteilschritt erheblich vereinfachen,- da es weniger kompliziert ist den Stator oder die einen Stator bildenden Bleche um einen bestimmten Winkel zu verdrehen als das gesamte Stanz-bzw. Fräswerkzeugpaket selbst. Erst nach dieser Drehung erfolgt dann der erforderliche Materialabtrag. Die zur Aufnahme des Rotors hergestellte Ausnehmung (Ausstanzung, Bohrung) mit über ihren Umfang verteilten Polen ist damit relativ zu den Symmetrieachsen des Statorquerschnittes verdreht.

Der Materialabtrag erfolgt vorzugsweise mittels Lasern, Wasserschneiden oder Stanzen, hierbei sind insbesondere Einzelnut- und Komplettnutstanzen gemeint.

Dieser Vorgang ist leicht zu automatisieren und die Fehlertoleranzen sind minimal. Mittels eines korrekt gewählten Winkels stellen sich bei geeigneter Wahl automatisch die geforderten Nutabstände bzw. Aussparungsabstände ein, so dass nicht die Abstände an sich überprüft oder nachgemessen werden müssen, sondern lediglich die Winkel zu überprüfen sind. Dies reduziert die notwendige Arbeitsschritte erheblich.

Bevorzugt liegt der Winkel α in einer Größenordnung um 360° / (4* N), abhängig von der Anzahl der Nuten N. Bei einem Stator mit N=6 Nuten ergibt sich somit ein Winkel α = 15 °. Bei vernachlässigbaren Aussparungsquerschnitten, d.h. die Aussparungsquerschnitte (abgetragenes, Statormaterial) sind in Relation zu den Nutquerschnitten (abgetragenes Statormaterial) vernachlässigbar klein, liefert dieser Winkel die optimierte Nut- und Aussparungsabstände.

Alternativ wird der Winkel α in der Größenordnung von 0< α < 360°/(2*N) Grad dimensioniert. Bei dem oben gewählten Beispiel von N = 6 Nuten ergibt sich damit ein Winkel von α im Bereich zwischen 0 und einschließlich 30°. Diese Berechnungsmethode wäre dann zu wählen, wenn die Aussparungsquerschnitte in Relation zu den Nutquerschnitten nicht mehr vernachlässigbar sind.

Der Winkel α kann jede natürliche Zahl oder Zahl mit Nachkommastellen innerhalb der oben genannten Zahlenbereiche annehmen, wobei die Grenzwerte 0 oder 360°/(2*N) mit umfasst, wobei der Grenzwert 360°/(2*N) ggf. auch geringfügig überschritten werden kann.

Die Nutanzahl N kann jede natürliche, d.h. ganzzahlige nicht negative Zahl exklusive Null annehmen, wobei sich N bevorzugt mittel der Formel N=3*i berechnet und i ebenfalls alle natürlichen Zahlen annehmen kann. Beispielsweise kann sich die Nutanzahl auf 3, 6, 9, 12, 15, 18, 21, 24, 27, 30, 33 oder 36 Nuten belaufen.

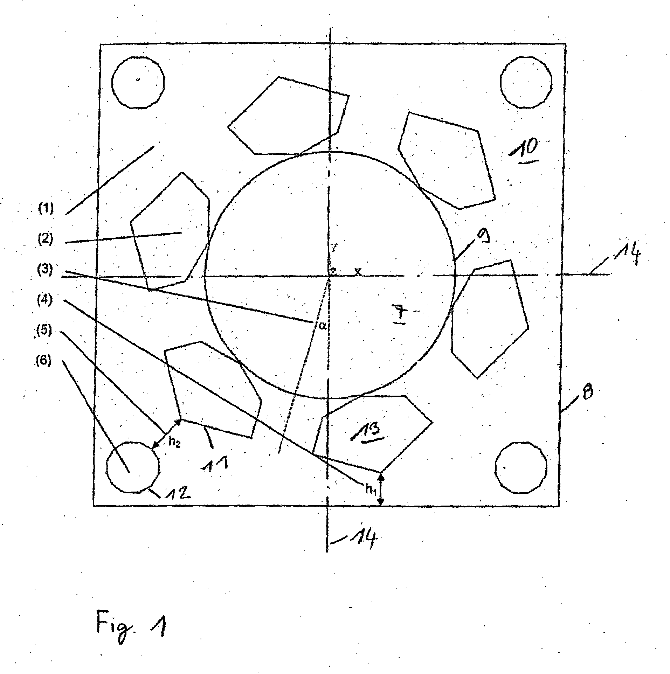

Figur 1 zeigt einen erfindungsgemäßen Stator, gebildet aus Statorblechen 1 mit sechs Statornuten 2, dem eingezeichneten Winkel α 3 sowie die, Rückenhöhe h1, welche den Wandungsabstand 4 und die Rückenhöhe h2, welche den Aussparungsabstand 5. kennzeichnet. Die Aussparungen selbst sind mittels des Bezugszeichens 6 gekennzeichnet.

Die bevorzugte Ausführungsform der Erfindung ist ein Stator, gebildet aus Statorblechen 1, für einen Servoantrieb mit quadratischer Umrandung 8, koaxialer Bohrung 7, sechs oder mehr am Umfang der Bohrung 6 angeordneten Nuten 2, deren Wandungsabstand 4 durch den kürzesten Abstand des Nutbodens 11 von der Statorumrandung 8 definiert ist, und Aussparungsbohrungen 6 in der vom Bohrungsumfang 9 und von der Statorumrandung 8 gebildeten Grundriss 10, deren Aussparungsabstand 5 durch den kürzesten Abstand zwischen Nutboden 11 und äußerer Umrandung der Aussparung 12 definiert ist, wobei die Nuten 2 so angeordnet sind, dass der Wandungsabstand 4 oder der Aussparungsabstand 5 maximal ist oder beide Werte identisch sind.

Die Nutquerschnitte 13 sind im Bild polygonförmig ausgebildet, wobei der Nutboden 11 V-förmig und gleichschenkelig geformt ist, so dass der kürzeste Abstand (Wandungsabstand/Aussparungsabstand) zwischen der von beiden Schenkeln gebildeten Spitze und dem Statorumfang 8 bzw. dem Aussparungsumfang 12 gemessen wird.

Der in der Figur 1 eingezeichnete Winkel α (3) zeigt an, um wie viel Grad ein laminiertes Statorblech 1 zu drehen wäre, bevor die Nuten 13 bzw. Aussparungen 6 ausgestanzt werden. Der. Winkel wurde mittels einer Vielzahl von Wandungs- bzw. Aussparungsabständen ermittelt und zwar derart, dass für diejenige Drehstellung der Drehwinkel α verwendet wird, bei dem der praktisch größte Abstandswert aus einer Liste von ermittelten Minimalwerten der Wandungs- bzw. Nutabstände vorliegt unter der Randbedingung, dass der jeweils nicht betrachtete Abstandswert genauso groß oder größer als der betrachtete Abstandswert ist.

Bezugszeichenliste
- 1: Statorblech
- 2: Statornut
- 3: Drehwinkel
- 4: Wandungsabstand
- 5: Aussparungsabstand
- 6: Aussparung
- 7: Bohrung
- 8: Statorumrandung
- 9: Bohrungsumrandung
- 10: Blech
- 11: Nutboden
- 12: Aussparungsumrandung
- 13: Nutquerschnitt
- 14: Symmetrieachsen

## Patentansprüche

1. Stator eines Elektromotors mit vieleckiger Umrandung (8), Rotoraussparung (7), N am Umfang (9) der Rotoraussparung (7) angeordneten Nuten (13), deren Wandungsabstand (4, h1) durch den kürzesten Abstand des Nutbodens (11) von der Statorumrandung (8) definiert ist, und Aussparungen (6) in dem zwischen Rotoraussparungsumfang (9) und Statorumrandung (8) gebildeten Grundriß (10), deren Aussparungsabstand (5, h2) durch den kürzesten Abstand zwischen Nutboden (11) und äußerer Aussparungsumrandung (12) definiert ist, **dadurch gekennzeichnet, dass,** die Nuten (13) so angeordnet sind,
- dass der Wandungsabstand (4, h1) im wesentlichen maximal ist, wobei als Randbedingung der Aussparungsabstand (5, h2) größer oder im wesentlichen gleich dem Wandungsabstand (4, h1) ist oder
- dass der Aussparungsabstand (5, h2) im wesentlichen maximal ist, wobei als Randbedingung der Wandungsabstand (4, h1) größer oder im wesentlichen gleich dem Aussparungsabstand (5, h2) ist oder
- dass Wandungsabstand (4, h1) und der Aussparungsabstand (5, h2) im wesentlichen gleich groß sind.

2. Stator nach Anspruch 1, **dadurch gekennzeichnet, dass** Aussparungsabstände (5, h2) bzw. Wandungsabstände (4, h1) für praktisch jede fiktiven Drehstellung der Rotoraussparung (7) inklusive der an der Rotoraussparung (7) angeordneten Nuten (13) relativ zur Querschnittsmittelachse (14) des Stators ermittelt werden und aus den so gewonnenen Werten, welche jeweils die Minimalabstände für Wandabstand (4, h1) bzw. Aussparungsabstand (5, h2) repräsentieren, die im wesentlichen maximalen Werte oder im wesentlichen gleich großen Werte oder zumindest ein im wesentlichen maximaler Wert ausgewählt wird.

3. Stator nach Anspruch 2, **dadurch gekennzeichnet, dass** für diejenige Drehstellung ein Drehwinkel α (3) definiert ist, bei dem der praktisch größte Abstandswert oder die praktisch gleich großen Abstandswerte aus den ermittelten Minimalabständen vorliegt.

4. Stator nach einem der vorhergehenden Ansprüche, **dadurch gekennzeichnet, dass** der Nutquerschnitt (13) polygonförmig ist, wobei der Nutboden (11) V-förmig und gleichschenklig ausgebildet ist.

5. Stator nach einem der vorhergehenden Ansprüche, **dadurch gekennzeichnet, dass** der Stator (1) aus gestanzten und laminierten Einzelblechen gebildet ist.

6. Stator nach einem der vorhergehenden Ansprüche, **dadurch gekennzeichnet, dass** der Statorquerschnitt (1) die Form eines Rechteckes, vorzugsweise eines Quadrates, hat und die Aussparungen (6) innerhalb der Ecken des Rechteckes als Ausstanzungen oder Ausnehmungen, vorzugsweise als Bohrungen (6), ausgebildet sind.

7. Stator nach einem der vorhergehenden Ansprüche, **dadurch gekennzeichnet, dass** der Stator (1) einteilig ausgebildet ist.

8. Stator nach einem der vorhergehenden Ansprüche, **dadurch gekennzeichnet, dass** der Stator (1) mehrteilig ausgebildet ist.

9. Stator nach einem der vorhergehenden Ansprüche, **dadurch gekennzeichnet, dass** es sich um den Stator (1) eines Servomotors, vorzugsweise für Roboteranwendungen, handelt.

10. Verfahren zur Herstellung eines Stators (1) mit N Nuten (13) nach einem der vorhergehenden Ansprüche, welches folgende Schritte umfasst:
a) bewegen des Stators um einen Drehwinkel α (3) relativ zu einer Querschnittsmittelachse (14) des Stators;
b) anschließend Materialabtrag (13, 6, 7).

11. Verfahren zur Herstellung eines Stators mit N Nuten nach Anspruch 10, **dadurch gekennzeichnet, dass** der Winkel α (3) in einer Größenordnung um 360°/(4*N) liegt, und N alle natürlichen Zahlen annehmen kann.

12. Verfahren zur Herstellung eines Stators mit N Nuten nach Anspruch 10, **dadurch gekennzeichnet, dass** der Winkel α (3) in einem Zahlenbereich zwischen einschließlich 0 und einschließlich 360°/(2*N) liegen kann, und N alle natürlichen Zahlen annehmen kann.
